# EUROPÄISCHE PATENTSCHRIFT

(11) **EP 0 960 561 B1**
(45) Veröffentlichungstag und Bekanntmachung des Hinweises auf die Patenterteilung: **06.11.2002**
(21) Anmeldenummer: 99108437.7
(22) Anmeldetag: 29.04.1999
(51) Int. Cl.: A01F 12/40

(54) **Häcksler zum Zerkleinern von Halmgut**
Crop chopper
Hacheuse pour produits de récolte

(30) Priorität: 26.05.1998 DE 19823489
(43) Veröffentlichungstag der Anmeldung: 01.12.1999
(73) Patentinhaber: Schrattenecker, Franz, A-4773 Eggerding (AT)
(72) Erfinder: Schrattenecker, Franz, A-4773 Eggerding (AT)
(74) Vertreter: Laufhütte, Dieter, Dr.-Ing.

(56) Entgegenhaltungen:
- EP-A- 0 479 329
- EP-A- 0 538 599
- DE-A- 19 535 175
- DE-B- 1 006 195
- DE-C- 363 650
- FR-A- 2 569 520
- GB-A- 1 043 712
- US-A- 2 626 159
- US-A- 2 842 175
- PATENT ABSTRACTS OF JAPAN vol. 096, no. 012, 26. Dezember 1996 (1996-12-26) & JP 08 214680 A (KUBOTA CORP), 27. August 1996 (1996-08-27)
- PATENT ABSTRACTS OF JAPAN vol. 013, no. 504 (C-653), 13. November 1989 (1989-11-13) & JP 01 202221 A (KUBOTA LTD), 15. August 1989 (1989-08-15)

## Beschreibung

Die Erfindung betrifft einen Häcksler zum Zerkleinern von Halmgut, vorzugsweise zum Zerkleinern von Stroh hinter dem Schüttlerende eines Mähdreschers, nach dem Oberbegriff des Anspruchs 1.

In dem Häckslergehäuse ist ein mit Schneidwerkzeugen und einem Antrieb versehener Rotor drehbar gelagert. Bei den Schneidwerkzeugen kann es sich um Schneidmesser handeln, die feststehend angeordnet oder pendelnd bzw. freischwingend aufgehängt sein können. Als Schneidwerkzeuge können aber auch rotierende Mitnehmerplatten verwendet werden, die feststehend angeordnet oder freischwingend aufgehängt sein können. Das Häckslergehäuse befindet sich im allgemeinen unterhalb eines Einlauftrichters, dessen Vorderwand und Rückwand auf das Häckslergehäuse zulaufen und den von dem Rotor überstrichenen Einlaufbereich in das Häckslergehäuse begrenzen. Im Bereich des Rotors ist femer ein einen Häckslerboden bildendes Leitblech vorgesehen. Ferner ist ein Auslaß vorhanden, durch den das Häckselgut den Häcksler verlassen kann. Oberhalb des Auslasses kann eine Luftauslaßhaube angeordnet sein. Diese kann an ihren oberen und/oder unteren Kantenbereichen gegenüber dem Einlauftrichter und dem Auslauf durch Staubleche begrenzt sein. Diese Staubleche reichen vorzugsweise sehr nahe, also beispielsweise bis etwa 5 bis 10 mm, an den Umlaufkreis der Schneidwerkzeuge heran.

Aus der DE-A-195 30 028 ist ein Häcksler zum Zerkleinern von Halmgut mit einem Häckslergehäuse, mit einem einen Häckslerboden bildenden Leitblech und mit einem Auslaß bekannt. In den Häckslergehäuse ist ein mit Schneidwerkzeugen und einem Antrieb versehener Rotor drehbar gelagert. Bei diesem bekannten Strohhäcksler wird der in Form eines Mantels den Rotor einfassende und mitrotierende Luftring dadurch gebrochen, daß das unter dem Schüttlerende befindliche und die Rückwand des Einlauftrichters bildende Strohleitblech derart bogenförmig gekrümmt ist, daß das obere gekrümmte Ende unter den Schüttlern liegt, während das untere Ende etwa senkrecht in den Einlauf des Häckslergehäuses ausläuft.

Ein Häcksler nach dem Oberbegriff des Anspruchs 1 ist aus der JP-A-08214680 bekannt.

Aufgabe der Erfindung ist es, einen Häcksler der eingangs angegebenen Art zu verbessern.

Erfindungsgemäß wird diese Aufgabe durch die Merkmale des Anspruchs 1 gelöst. An dem Häckslerboden sind Gegenmesser vorgesehen. Die Gegenmesser sind vorzugsweise in einem Messerbalken angeordnet. Die Gegenmesser befinden sich vorzugsweise im Auslaufbereich des Häckslerbodens bzw. Leitbleches, also im Bereich des Endes des Häckslerbodens bzw. Leitbleches. An die Gegenmesser schließt sich der Auslaß vorzugsweise unmittelbar an.

In dem Häckslerboden sind Schlitze angeordnet. Dies ist in der prioritätsälteren, nicht vorveröffentlichten DE-A-197 49 337 im einzelnen beschrieben, auf die hiermit ausdrücklich Bezug genommen wird und deren Inhalt - auch im übrigen - hiermit in die vorliegende Anmeldung einbezogen wird. Die Schlitze sind vorzugsweise über die Breite des Rotors vorgesehen. Sie bewirken, daß der durch die Verengung des Rotorfliehkreises und die Gegenschneiden erzeugte Aufwind im Einlaufbereich des Strohs nach außen gelenkt bzw. gebrochen wird. Auf diese Weise wird anstelle eines die Annahme des Strohs behindernden Aufwinds eine Saugwirkung durch die Rotation des Rotors erreicht. Hierdurch wird die Annahme des Strohs von dem Häcksler begünstigt.

Die Schlitze werden von beweglichen Zinken durchgriffen. Durch diese Zinken wird verhindert, daß sich im Bereich der Schlitze Häckselgut festsetzen kann, das die Schlitze zusetzen könnte, so daß sie ihre Entlüftungswirkung einbüßen würden. Anstelle der Zinken können auch andersartige Werkzeuge verwendet werden, die die Schlitze freihalten und/oder die das Häckselgut weiterfördern.

Vorteilhafte Weiterbildungen sind in den Unteransprüchen beschrieben.

Die Zinken sind vorzugsweise auf einer antreibbaren Walze angeordnet. Sie bewegen sich in der Bewegungsrichtung des Häckselgutes, also in Richtung zum Häcksler, wodurch das Häckselgut zum Häcksler weitergefördert wird.

Vorzugsweise sind im Bereich des Einlaufspalts weitere Gegenmesser vorgesehen. Auch diese Gegenmesser sind vorzugsweise in einem Messerbalken angeordnet. Sie befinden sich vorzugsweise unmittelbar hinter dem Einlaufspalt des Häckslers. Dadurch, daß Gegenmesser sowohl im hinteren Bereich des Häckslerbodens vorgesehen sind als auch im vorderen Bereich, wird die Häckselwirkung erheblich verbessert.

Vorzugsweise ragen die Gegenmesser in den Umlaufkreis der Schneidwerkzeuge hinein. Um dies zu ermöglichen sind die Schneidwerkzeuge mit entsprechenden Spalten versehen, die von den Gegenmessem durchgriffen werden. Dies ist in der prioritätsälteren, nicht vorveröffentlichten DE-A-197 49 338 beschrieben, auf die hiermit ausdrücklich Bezug genommen wird und deren Inhalt - auch im übrigen - hiermit in die vorliegende Anmeldung einbezogen wird.

Ausführungsbeispiele der Erfindung werden nachstehend anhand der beigefügten Zeichnung im einzelnen erläutert. In der Zeichnung zeigt
- Fig. 1: eine erste Ausführungsform eines Häckslers mit rotierenden Mit-. nehmerplatten in einer schematischen Seitenansicht,
- Fig. 2: eine zweite Ausführungsform mit pendelnd aufgehängten Messern und

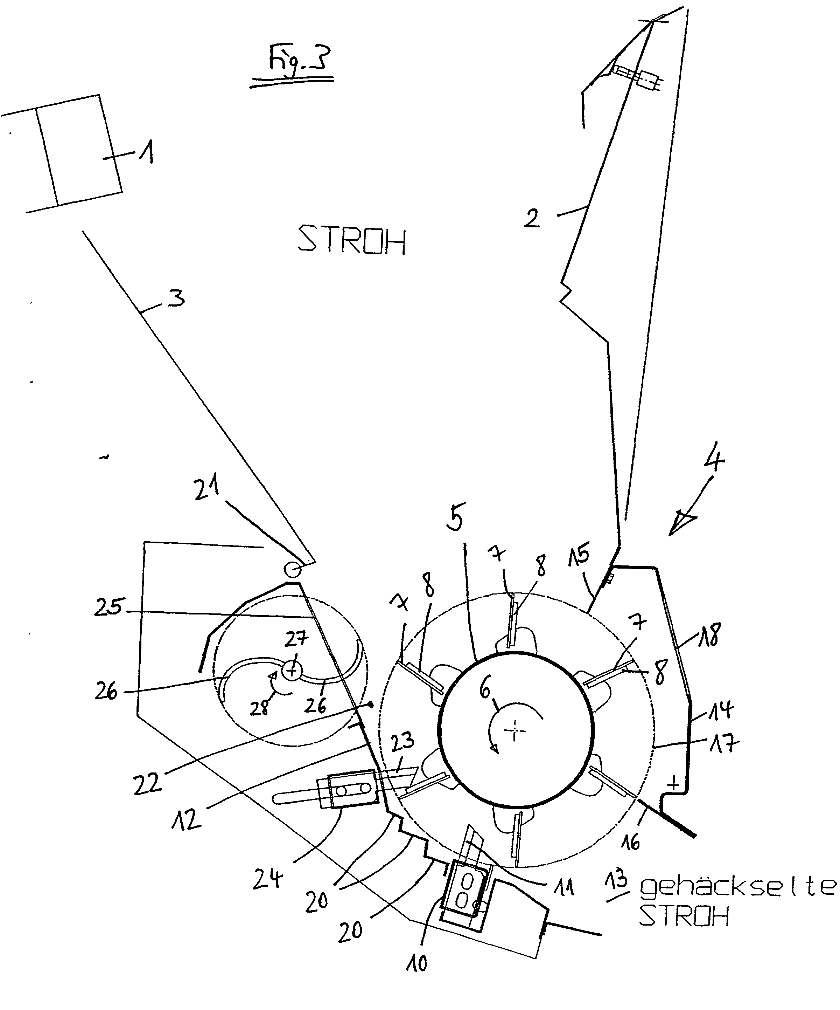

- Fig. 3: die Ausführungsform gemäß Fig. 1 in einer Darstellung ohne die die Luftströmung andeutenden Pfeile.

Unter dem Ende eines Schüttlers 1 eines Mähdreschers ist das trichterförmige Einlaufgehäuse für das Stroh angeordnet, dessen vordere Wand 2 und hintere Wand 3 auf das Häckslergehäuse 4 zulaufen und den vom Rotor 5 überstrichenen Einlaufbereich in das Häckslergehäuse begrenzen. Auf dem Mantel des in Richtung des Pfeils 6 rotierenden Rotors 5 sind Schneidwerkzeuge 7 angeordnet, die als Mitnehmerplatten ausgebildet sind und deren Halteplatten 8 fest oder um Achsen schwenkbar an dem Rotormantel 5 gehaltert sein können.

Im Auslaufbereich des Häckslergehäuses ist ein Messerbalken 10 gehäusefest angeordnet, in dem mit den Mitnehmerplatten 7 zusammenwirkende Gegenmesser 11 gehaltert sind.

Der Bereich zwischen dem unteren Ende 21 der hinteren Wand 3 des trichterförmigen Einlaufgehäuses und dem Messerbalken 10 ist durch den Häckslerboden 12, der einen Teil des Häckslergehäuses 4 bildet, geschlossen. Der Häckslerboden 12 bildet ein Leitblech für das Häckselgut.

Im Bereich des Einlaufspalts 22 des Häckslers sind weitere Gegenmesser 23 vorgesehen, die an einem zweiten Messerbalken 24 angeordnet sind. Die Messer 11 und 23 sind jeweils zustellbar, also in Richtung zur Drehachse des Rotors 5 oder von dieser weg bewegbar. Die Gegenmesser 11 und 23 ragen in den Umlaufkreis 17 der Schneidwerkzeuge 7 hinein. Um dies zu ermöglichen weisen die Schneidwerkzeuge bzw. Mitnehmerplatten 7 entsprechende Spalte auf.

Der Häckslerboden 12 weist in dem Bereich zwischen den Messerbalken 24 und 10 stufenförmige Erhebungen 20 auf, die als Staubleche wirken und den störenden Aufwind zusätzlich brechen und verwirbeln.

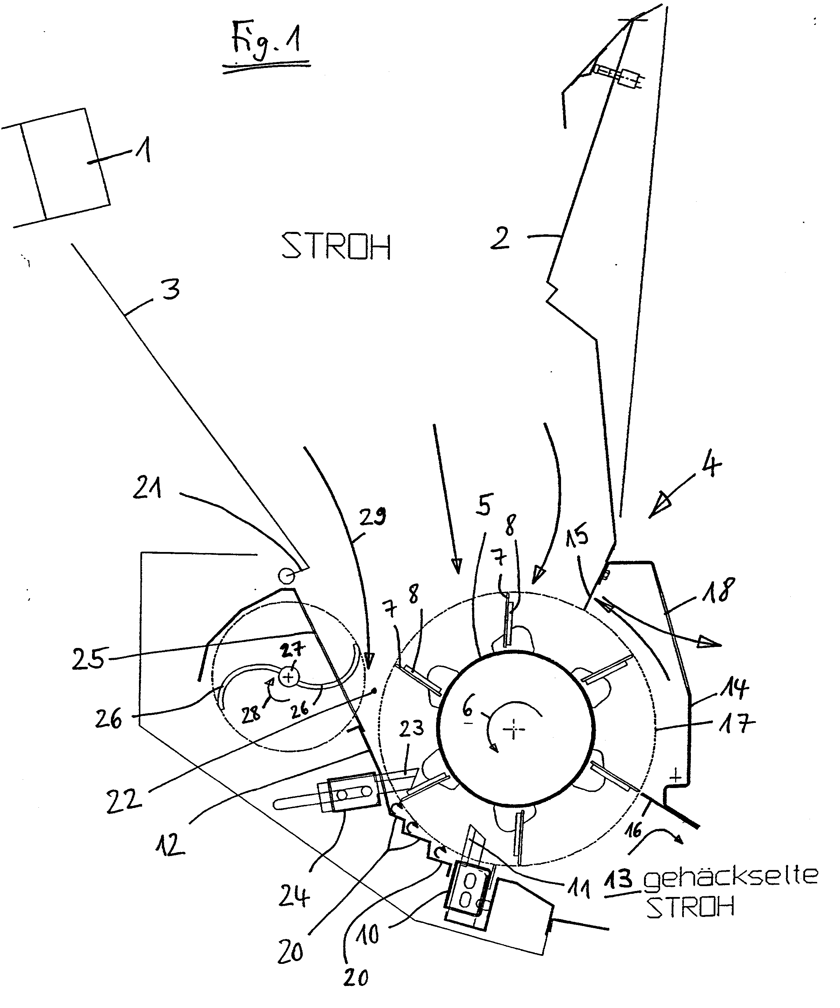

Ferner sind in dem Häckslerboden 12 im Bereich zwischen dem unteren Ende 21 der hinteren Wand 3 und dem Messerbalken 24 Schlitze 25 vorgesehen, die jeweils in Längsrichtung verlaufen und deren Vielzahl sich im wesentlichen über die Breite des Rotors erstreckt. Die Schlitze 25 werden von beweglichen Zinken 26 durchgriffen, die auf einer in Pfeilrichtung 28 antreibbaren Walze (Zubringerwalze) 27 angeordnet sind. Wie aus Fig. 1 ersichtlich bewegen sich diejenigen Teile der Zinken 26, die die Schlitze 25 durchgreifen, zu dem Rotor bzw. den Gegenmessem 23 hin. Sie fördern das Häckselgut in Richtung des Pfeils 29 in den Einlaufspalt 22 des Häckslers. Auf diese Weise verhindern die gekrümmten Zinken 26 der Zubringerwalze 27, daß sich im Bereich des Einlaufspalts 22 Häckselgut festsetzen kann. Dieses Häckselgut wird von dort in den Einlaufschlitz des Häckslers weitergefördert. Die Zinken 26 sind in der aus Fig. 1 ersichtlichen Weise in Drehrichtung 28 gekrümmt.

Oberhalb des Auslasses 13 des Häckslergehäuses ist eine Haube 14 angeordnet, die an ihrem oberen Ende mit einem Staublech 15 und an ihrem unteren Ende mit einem weiteren Staublech 16 versehen ist, die in der dargestellten Weise an den von den Schneidwerkzeugen 7 überstrichenen Umlaufkreis 17 angestellt sind. Die Staubleche 15 und 16 verlaufen im wesentlichen senkrecht zu der Tangente an den Umlaufkreis 17; sie weisen also im wesentlichen zur Drehachse des Rotors. Die Staubleche 15 und 16 enden in einem sehr kurzen Abstand von etwa 5 bis 10 mm vor dem Umlaufkreis 17. Die Haube 14 ist auf ihrer Vorderseite mit einem oder mehreren Durchbrüchen bzw. Lüftungsschlitzen 18 versehen, durch die Luft störungsfrei austreten und abströmen kann.

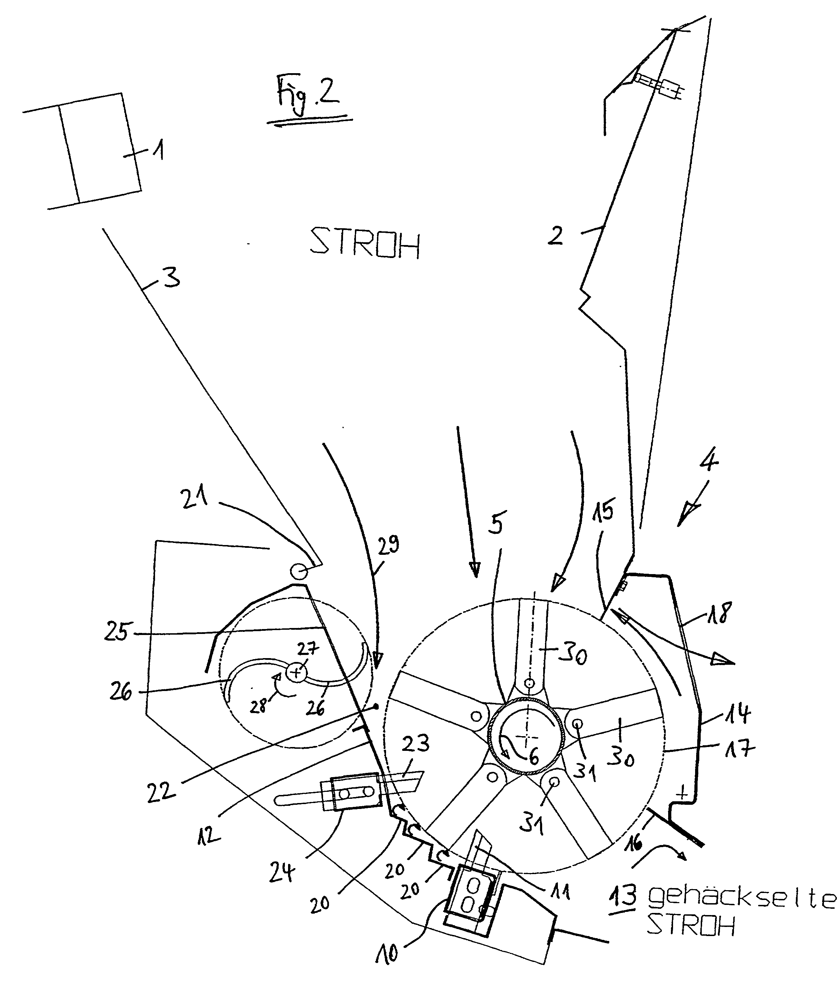

Bei dem Ausführungsbeispiel nach Fig. 2 sind anstelle der Mitnehmerplatten 7 Schlegelmesser 30 vorhanden, die an Achsen 31 pendelnd aufgehängt sind.

## Patentansprüche

1. Häcksler zum Zerkleinern von Halmgut, vorzugsweise zum Zerkleinern von Stroh hinter dem Schüttlerende (1) eines Mähdreschers,
mit einem Häckslergehäuse (4), in dem ein mit Schneidwerkzeugen (7; 30) und einem Antrieb versehener Rotor (5) drehbar gelagert ist,
mit einem einen Häckslerboden (12) bildenden Leitblech
und mit einem Auslaß (13),
wobei an dem Häckslerboden (12) Gegenmesser (11) vorgesehen sind
und wobei in dem Häckslerboden (12) Schlitze (25) angeordnet sind,
**dadurch gekennzeichnet,**
**daß** die Schlitze (25) von beweglichen Zinken (26) durchgriffen werden.

2. Häcksler nach Anspruch 1, **dadurch gekennzeichnet, daß** die Zinken (26) auf einer antreibbaren Walze (27) angeordnet sind.

3. Häcksler nach Anspruch 1 oder 2, **dadurch gekennzeichnet, daß** im Bereich des Einlaufspalts (22) weitere Gegenmesser (23) vorgesehen sind.

4. Häcksler nach einem der vorhergehenden Ansprüche, **dadurch gekennzeichnet, daß** die Gegenmesser (11, 23) in den Umlaufkreis (17) der Schneidwerkzeuge (7; 30) hineinragen.

## Claims

1. Cutter for comminuting haulm, preferably for comminuting straw downstream of the end (1) of the walkers in a combine harvester,
having a cutter housing (4) in which a rotor (5) provided with cutting tools (7; 30) and a drive is rotatably mounted,
having a guide plate forming a cutter base (12),
and having an outlet (13),
opposing knives (11) being provided on the cutter base (12)
and slots (25) being arranged in the cutter base (12), **characterized in that** movable tines (26) reach through the slots (25).

2. Cutter according to Claim 1, **characterized in that** the tines (26) are arranged on a drivable roll (27).

3. Cutter according to Claim 1 or 2, **characterized in that** further opposing knives (23) are provided in the area of the inlet gap (22).

4. Cutter according to one of the preceding claims, **characterized in that** the opposing knives (11, 23) project into the circle of revolution (17) of the cutting tools (7; 30).

## Revendications

1. Hacheuse pour hacher des produits de récolte, de préférence pour hacher de la paille derrière l'extrémité de secoueur (1) d'une moissonneuse-batteuse, avec un carter de hacheuse (4) dans lequel est logé d'une manière tournante un rotor (5) pourvu d'outils de coupe (7 ; 30) et d'un dispositif d'entraînement, avec une tôle de chicane formant un fond de hacheuse (12) et avec une sortie (13), où sont prévus au fond de hacheuse (12) des contre-couteaux et où sont ménagées dans le fond de hacheuse (12) des fentes (25), **caractérisée en ce que** les fentes (25) sont traversées par des dents mobiles (26).

2. Hacheuse selon la revendication 1, **caractérisée en ce que** les dents (26) sont disposées sur un cylindre (27) pouvant être entraîné.

3. Hacheuse selon la revendication 1 ou 2, **caractérisée en ce que** d'autres contre-couteaux (23) sont prévus au voisinage de la fente d'entrée (22).

4. Hacheuse selon l'une des revendications précédentes, **caractérisée en ce que** les contre-couteaux (11, 23) font saillie dans le cercle de rotation (17) des outils de coupe (7 ; 30).
